# EUROPEAN PATENT APPLICATION

(11) **EP 2 613 446 A2**
(43) Date of publication of application: **10.07.2013**
(21) Application number: 11822045.8
(22) Date of filing: 25.07.2011
(51) Int. Cl.: H04B 1/38, H04M 1/02

(54) **MOBILE TERMINAL AND METHOD FOR MANUFACTURING SAME**

(30) Priority: 02.09.2010 KR 20100085813
(71) Applicant: Bluebird Soft Inc., Seoul 135-856 (KR)
(72) Inventor: LEE, Jang Won, Seoul 135-240 (KR); YOON, Chu Young, Seoul 150-106 (KR)
(74) Representative: Grünecker, Kinkeldey, Stockmair & Schwanhäusser
(86) International application number: PCT/KR2011/005480
(87) International publication number: WO 2012/030070

(57) **Abstract**

Disclosed are a mobile terminal and a method for manufacturing same. The mobile terminal of the present invention comprises: a rear-side case provided with a side key mounting portion, having on a plate surface thereof a side key through-hole; a waterproof tape which is provided on the inner surface along the edge of the side key through-hole of the side key mounting portion; and a side key unit which couples to the waterproof tape. According to the present invention, provided are the mobile terminal and the method for manufacturing same, the mobile terminal having a superior waterproof function and which is easy to produce and assemble.

## Description

### [TECHNICAL FIELD]

The present invention relates to a mobile terminal and a method for manufacturing the same, and more particularly, to a mobile terminal having an assembly structure of a side key that is easy to manufacture and assemble, and has a superior waterproof function, and a method for manufacturing the same.

### [BACKGROUND ART]

A mobile terminal is a terminal that can be freely used while moving around without positional restrictions. A typical mobile terminal includes a mobile communication terminal such as a cellular phone; a personal digital assistant (PDA) called a personal portable terminal, etc. Accordingly, the term "mobile terminal" used herein includes all of the above-described terminals. In the following description, however, for convenience of explanation, the mobile terminal refers to a PDA.

PDA is referred to as a pocket computer, collectively called a palm-sized compact device with a calculation function and an information storing and searching function for a personal or business use, and is widely used to keep information of a schedule calendar and an address book.

In particular, an industrial PDA is widely used mainly for distribution industry and a market for the industrial PDA is gradually growing. The industrial PDA is equipped with various office functions such as a barcode scanner, a credit card reader, etc., which are not provided in a general PDA. The use of the industrial PDA makes delivery, document management, and related businesses easy and efficient. For example, in an insurance company, an insurance broker can directly process various insurance related businesses such as customer information management, customer search, schedule management, meeting schedule management, anniversaries search, fund statement processing, etc., on the spot by using the industrial PDA. Next, in a hospital, medical staffs can input or search for patient's treatment records and case history, prescriptions, images such as X-ray images, graphical materials, etc., without restrictions in time and place, by using the industrial PDA being carried. Also, for police forces' services, police forces' outside duty such as traffic control or neighborhood security is performed by using the industrial PDA so that a fine issued for a traffic offense can be instantly paid through a financial institution, which could have been paid 2-3 days after the fine was issued. As a result, the police forces' outside duty time can be remarkably reduced.

As it can be seen from the fact that the industrial PDA is used in the above-described various industrial fields, the industrial PDA needs to endure any industrial environment, not a general environment for a general PDA, beyond a certain level. In other words, unlike a general PDA, it is expected that the industrial PDA may be used in a cold storage warehouse below -10 degrees or outdoors for a long time. Also, the industrial PDA may be toughly handled by a user like a postman. Accordingly, an industrial PDA equipped with an anti-shock function, a waterproof function, an anti-heat/cold function, etc. may be competitive in the product market. As such, it is essential that the industrial PDA is manufactured tougher and harder than a general PDA and further equipped with a waterproof function to endure snow or rain.

In the waterproof function of an industrial PDA, one of important parts that are structurally weak to water is an assembly structure of a side key that is provided for user's convenience. The side key is a part attached to a side surface of a mobile terminal to transfer an information signal selected by a user to a main printed circuit board (PCB).

Thus, in the case of an industrial PDA among other mobile terminals, development of a product equipped with an assembly structure of a side key that is easy to manufacture and assemble and has a superior waterproof function is needed.

### [DETAILED DESCRIPTION OF THE INVENTION]

### [TECHNICAL PROBLEM]

The present invention provides a mobile terminal that is easy to manufacture and assemble and has a superior waterproof function, and a method for manufacturing the same.

### [TECHNICAL SOLUTION]

According to an aspect of the present invention, there is provided a mobile terminal including a rear-side case provided with a side key mounting portion having a side key through-hole formed in a plate surface of the rear-side case, a waterproof tape provided on an inner surface along an edge portion of the side key through-hole of the side key mounting portion, and a side key unit coupled to the waterproof tape.

The side key unit may include a button unit coupled to the waterproof tape and performing a user input, a side key PCB provided adjacent to the button unit and transferring a signal input from the button unit to a main PCB, and a side key bracket coupled to the side key PCB and coupled to the side key mounting portion to support the button unit.

The button unit may include a side button outwardly protruding through the side key through-hole and a side key rubber coupled to the side button and coupled to the waterproof tape along an edge portion where the side button is coupled.

The side key rubber may include a rubber body portion coupled to the waterproof tape and a rubber input portion provided with a carbon contact for transferring a user input at a center portion of the rubber body portion.

The rubber input portion may have a dome shape at the center portion of the rubber body portion.

The side key rubber may be formed of an elastic material.

The side key robber may be integrally formed to prevent an intrusion of moisture or foreign materials through a surface.

The side key PCB may include an input substrate portion receiving an input of a signal through contact of the button unit and a connection terminal portion coupled to the input substrate portion, electrically connected to the main PCB in a state of at least a part of the connection terminal portion being elastically pressed, and transferring an input signal to the main PCB.

The connection terminal portion may include a plurality of pogo pins, and the pogo pins may be electrically connected to the main PCB.

The side key bracket may include a bracket body portion coupled to the side key PCB and stably fixing and supporting the button unit, a bracket wing portion extending from each of opposite side surfaces of the bracket body portion, forming a step, and vertically slidably coupled to the rear-side case, and a bracket coupling portion protruding from a lower portion of the bracket body portion and having a through-hole formed in a plate surface of the bracket coupling portion to be coupled to the rear-side case.

The bracket coupling portion may be screw-coupled to the rear-side case.

The rear-side case may include a sliding coupling portion provided at each of opposite side surfaces of the side key mounting portion and to which the bracket wing portion is vertically slidably coupled, and a screw coupling portion provided adjacent to a lower portion of the side key mounting portion and having a coupling hole for coupling the bracket coupling portion.

The waterproof tape may be an adhesive tape that is attachable on a rubber material.

According to another aspect of the present invention, there is provided a method for manufacturing a mobile terminal, which includes providing a rear-side case equipped with a side key mounting portion, providing a side key rubber by forming the side key rubber, closely coupling a side button to the side key rubber, attaching a waterproof tape on an inner surface (of what?) along an edge portion of a side key through-hole of the rear-side case, attaching the side key rubber to the waterproof tape, coupling a side key PCB and a side key bracket to each other, coupling the side key bracket coupled with the side key PCB to a sliding coupling portion of the rear-side case, and coupling the side key bracket to a screw coupling portion of the rear-side case.

In the providing of the side key rubber by forming the side key rubber, the side key rubber may be formed of an elastic material by an injection molding method.

### [ADVANTAGEOUS EFFECTS]

According to the present invention, a mobile terminal that is easy to manufacture and assemble and has a superior waterproof function and a method for manufacturing the same, are provided.

### [DESCRIPTION OF THE DRAWINGS]

FIG. 1 is a perspective view of a mobile terminal according to an embodiment of the present invention;

FIG. 2 is a perspective view illustrating the mobile terminal of FIG. 1 with a front surface case removed;

FIG. 3 is a plan view of FIG. 2;

FIG. 4 is a perspective view of a side key portion of FIG. 3;

FIG. 5 is an exploded perspective view of an assembly structure of a side key of FIG. 4;

FIG. 6 is an exploded perspective view of FIG. 5, viewed at a different angle;

FIG. 7 is a perspective view illustrating a state in which a side key rubber and a side key PCB of FIG. 5 are coupled to each other;

FIG. 8 is a cross-sectional view taken along line A-A of FIG. 7;

FIG. 9 is an enlarged perspective view of a side portion of FIG. 8; and

FIG. 10 is a flowchart for explaining a method for manufacturing a mobile terminal according to an embodiment of the present invention.

### [BEST MODE]

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

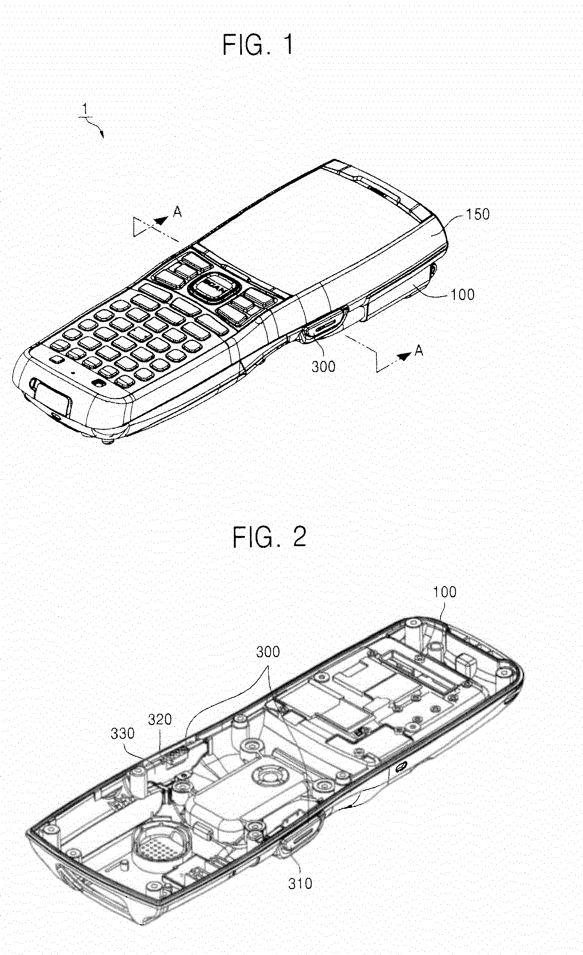

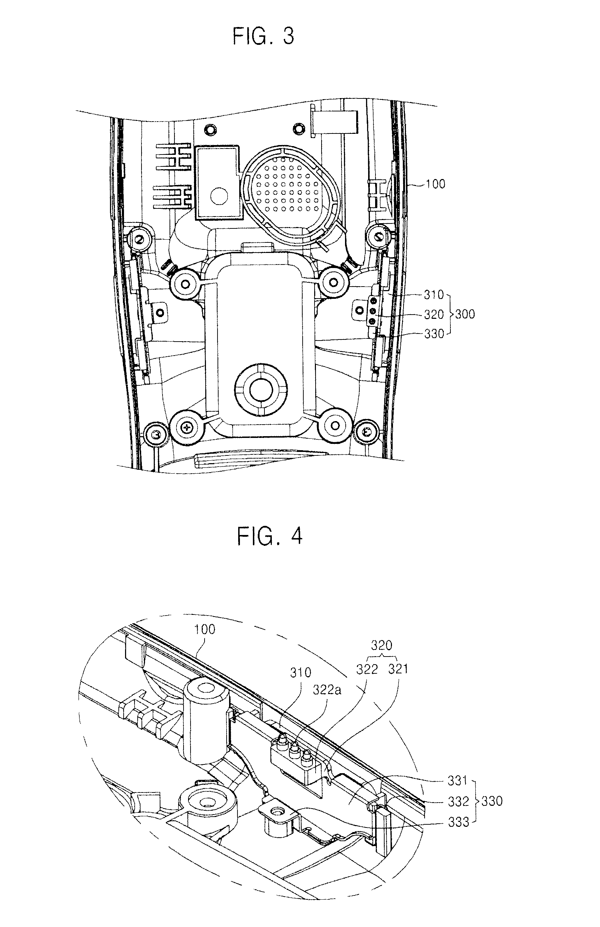

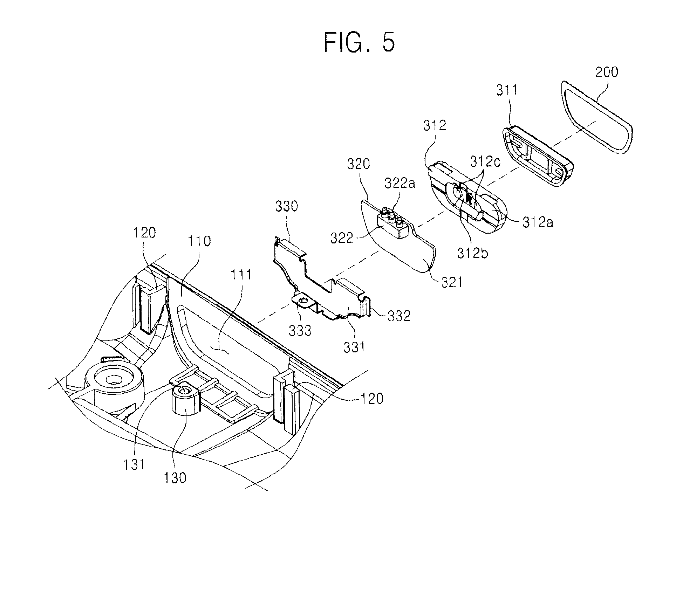

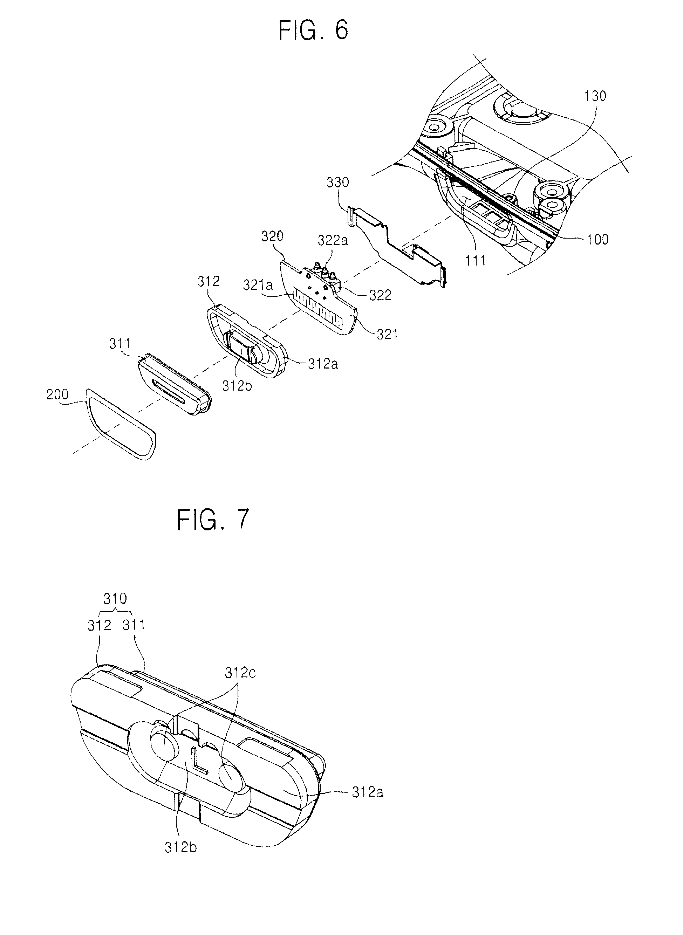

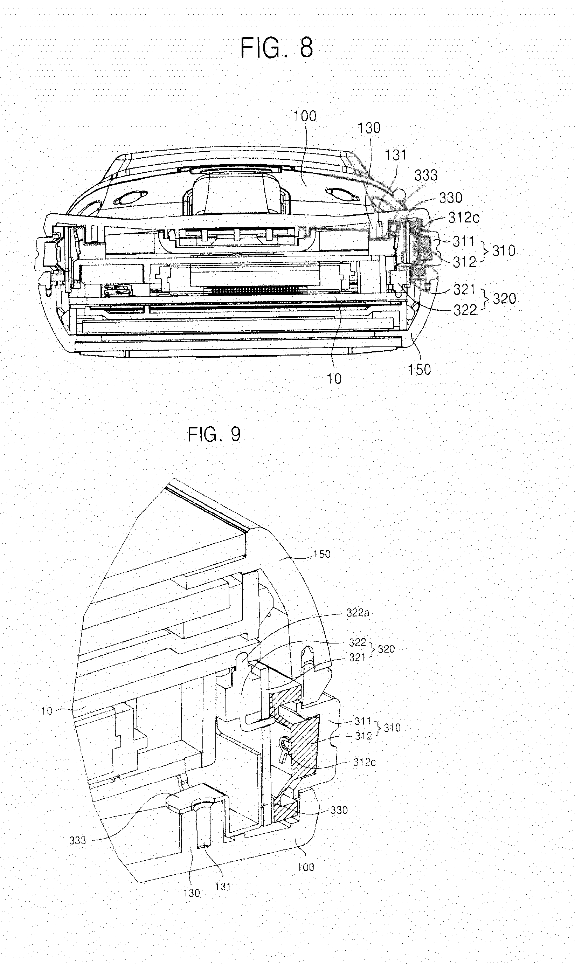

FIG. 1 is a perspective view of a mobile terminal according to an embodiment of the present invention. FIG. 2 is a perspective view illustrating the mobile terminal of FIG. 1 with a front surface case removed. FIG. 3 is a plan view of FIG. 2. FIG. 4 is a perspective view of a side key portion of FIG. 3. FIG. 5 is an exploded perspective view of an assembly structure of a side key of FIG. 4. FIG. 6 is an exploded perspective view of FIG. 5, viewed at a different angle. FIG. 7 is a perspective view illustrating a state in which a side key rubber and a side key PCB of FIG. 5 are coupled to each other. FIG. 8 is a cross-sectional view taken along line A-A of FIG. 7. FIG. 9 is an enlarged perspective view of a side portion of FIG. 7.

As illustrated in these drawings, a mobile terminal 1 according to the present embodiment includes a rear-side case 100 provided with a side key mounting portion 110, having on a plate surface thereof a side key through-hole 111, a waterproof tape 200 which is provided on the inner surface along the edge of the side key through-hole 111 of the side key mounting portion 110, and a side key unit 300 which couples to the waterproof tape 200.

The rear-side case 100, which is a part forming an external shape of the mobile terminal 1, is coupled to a front-side case 150 with a space for accommodating internal parts therebetween. The side key unit 300 is a part provided at a side surface of the mobile terminal 1 to receive an input of a user signal. The side key unit 300 transfers a user signal for menu selection, barcode input, etc. to a main PCB 10 of the mobile terminal. When the side key unit 300 is coupled to the mobile terminal 1, a gap occurs in a coupling portion thereof so that foreign materials or moisture may intrude into the mobile terminal 1. In particular, for an industrial PDA, which further requires a waterproof function and durability, when the structure according to the present embodiment is applied to the coupling between the side key unit 300 and the rear-side case 100 for convenience in assembly and a waterproof effect, convenience in manufacture and assembly and a superior waterproof function may be obtained at the same time. The coupling structure between the waterproof tape 200 and the side key unit 300 is described below.

Referring to FIGS. 5 and 6, the side key unit 300 includes a button unit 310 coupled to the waterproof tape 200 and performing a user input, a side key printed circuit board (PCB) 320 provided adjacent to the button unit 310 and transferring an input signal from the button unit 310 to the main PCB 10, and a side key bracket 330 coupled to the side key PCB 320 and coupled to the side key mounting portion 110 to support the button unit 310.

Referring to FIGS. 5 to 7, the button unit 310 is a part for performing a pressing operation when a user input is received through the side key unit 300. The button unit 310 includes a side button 311 protruding outwardly through the side key through-hole 111, and a side key rubber 312 coupled to the side button 311 and coupled to the waterproof tape 200 along an edge portion thereof coupled to the side button 311.

The side button 311 is a part that directly contacts a user during the user input and protrudes outside the mobile terminal 1 through the side key through-hole 111 of the rear-side case 100. The side button 311 is provided with an detachment prevention portion that is formed to be larger than the side key through-hole 111 of the rear-side case 100 on a lower portion of a protruding portion that protrudes outside the mobile terminal 1, thereby preventing the side button 311 from being detached from the mobile terminal 1 through the side key through-hole 111.

The side button 311 is manufactured by a plastic injection molding method. Although the side button 311 is molded of polycarbonate (PC) in the present embodiment, the side button 311 may be molded of other similar plastic materials.

The side key rubber 312 include a rubber body portion 312a coupled to the waterproof tape 200 and a rubber input portion 312b having a carbon contact 312c provided at a center portion of the rubber body portion 312a to transfer a user input.

The rubber body portion 312a is manufactured in a shape of the side button311 to be larger than the side button 311 so as to accommodate the side button 311. A rim is formed at an edge portion of the rubber body portion 312a in a thickness direction of the rubber body portion 312a to accommodate the side button 311 and thus the side button 311 is accommodated in a space inside the rim. Also, an end portion of the rim of the rubber body portion 312a is coupled to the waterproof tape 200.

The rubber input portion 312b is provided in a dome shape at the center portion of the rubber body portion 312a. Referring to FIGS. 5 to 9, the side button 311 is closely coupled to the rubber input portion 312b facing the outside of the mobile terminal 1, thereby integrally operating with the rubber input portion 312b when the side button 311 operates. The carbon contact 312c for transferring signals to the side key PCB 320 is provided on a surface thereof facing the inside of the mobile terminal 1. In other words, when the side button 311 is pressed, the rubber input portion 312b integrally coupled to the side button 311 operates together. Thus, the carbon contact 312c provided to face the side key PCB 320 of the rubber input portion 312b contacts the side key PCB 320 so that the user input is transferred to the side key PCB 320.

The side key rubber 312 is provided by using an elastic material. As the side key rubber 312 is formed of an elastic material, as described above, when the rubber input portion 312b is pressed by means of the side button 311 and then the pressure applied to the side button 311 is removed, the rubber input portion 312b and the side button 311 are returned to the original positions thereof by an elastic restoration force and thus user signals may be repeatedly input. Referring to FIGS. 7 and 8, the rubber input portion 312b of the side key rubber 312 has a tapered shape, and a cross-section of the rubber input portion 312b is gradually narrowed toward the side button 311. Accordingly, when the rubber input portion 312b is pressed by the side button 311 and then the pressure is removed, the rubber input portion 312b is returned to the original position by an elastic restoration force.

Also, the side key rubber 312 is integrally molded to prevent moisture or foreign materials through a gap formed in a surface of the side key rubber 312. The end portion of the rim of the rubber body portion 312a of the side key rubber 312 is attached to the waterproof tape 200 and thus moisture or foreign materials may not intrude between the side key rubber 312 and the waterproof tape 200. Thus, since the side key rubber 312 is integrally molded to prevent intrusion of moisture or foreign materials inwardly through the surface of the side key rubber 312, the generation of a gap in the surface of the side key rubber 312 is prevented. As the side key rubber 312 and the waterproof tape 200 are coupled to each other, a waterproof performance of the side key unit 300 of the mobile terminal 1 may be enhanced.

As a tape specially manufactured to be stably attached even to a rubber material is used as the waterproof tape 200, a waterproof effect is improved.

Referring to FIGS. 4 to 6, the side key PCB 320 includes an input substrate portion 321 receiving an input of a signal through a contact of the button unit 310 and a connection terminal portion 322 connected to the main PCB 10 to transfer an input signal to the main PCB 10.

The input substrate portion 321 is provided as a plate surface having a shape similar to the side key rubber 312 and a contact switch is printed at a center portion of the input substrate portion 321. When the button unit 310 is pressed and thus the carbon contact 312c provided at the side key rubber 312 contacts the contact switch of the input substrate portion 321, current flows on the contact switch and thus an input of the side key unit 300 is recognized.

The contact terminal portion 322 is provided on top of the rear surface of the input substrate portion 321 and electrically connected to the main PCB 10. The contact terminal portion 322 transfers a current signal recognized by input substrate portion 321 to the main PCB 10 and thus the input of the side key unit 300 may be recognized by the main PCB 10.

The contact terminal portion 322 includes a plurality of pogo pins 322a electrically connected to the main PCB 10 in a state of being elastically pressed.

Referring to FIGS. 4 to 6, the side key bracket 330 includes a bracket body portion 331 coupled to the side key PCB 320 and stably fixing and supporting the button unit 310, a bracket wing portion 332 extending from each of opposite side surfaces of the bracket body portion 331, forming a step, and vertically slidably coupled to the rear-side case 100, and a bracket coupling portion 333 protruding from a lower portion of the bracket body portion 331 and having a through-hole formed in a plate surface thereof to be coupled to the rear-side case 100.

The bracket body portion 331 has a shape similar to the side key PCB 320 to accommodate the side key PCB 320 and has a groove for accommodating the connection terminal portion 322 of the side key PCB 320 at a center of an upper surface thereof. The bracket body portion 331 is attached to the side key PCB 320 by using an adhesive tape.

The bracket wing portion 332 extends from each of the opposite side surfaces of the bracket body portion 331 having a shape similar to the side key PCB 320, forming a step. The bracket wing portion 332 is vertically slidably coupled to a sliding coupling portion 120 that is provided at each of opposite side surfaces of the side key mounting portion 110 of the rear-side case 100, so as to be easily assembled thereto.

The bracket coupling portion 333 protrudes from the lower portion of the bracket body portion 331 and having a through-hole in a plate surface thereof. The bracket coupling portion 333 is screw coupled to a screw coupling portion 130 provided at the rear-side case 100 through the through-hole of the bracket coupling portion 333.

The side key bracket 330 supports the button unit 310 and the side key PCB 320 of the side key unit 300 to firmly support the side key unit 300. The side key bracket 330 is formed of a steel material to firmly support other parts. In a method of mounting the side key bracket 330, the side key PCB 320 is coupled to the bracket body portion 331 by using an adhesive tape, the bracket wing portion 332 is slidably coupled to the rear-side case 100, and the bracket coupling portion 333 is screw coupled to the rear-side case 100. As such, the use of the side key bracket 330 facilitates assembly and disassembly and simplifies a process and thus firm coupling of the side key unit 300 is obtained.

Referring to FIGS. 2 to 6, the rear-side case 100 includes the sliding coupling portion 120 provided at the opposite side surfaces of the side key mounting portion 110 and to which the bracket wing portion 332 is vertically slidably coupled, and the screw coupling portion 130 provided adjacent to a lower portion of the side key mounting portion 110 and having a coupling hole 131 for coupling the bracket coupling portion 333.

The sliding coupling portion 120 is provided such that two columns are parallelly arranged with a space therebetween and the bracket wing portion 332 is slidably coupled in the space between the two columns. The sliding coupling portion 120 is provided to correspond to the bracket wing portion 332 at each side surface of the side key mounting portion 110.

The screw coupling portion 130 is provided at a position corresponding to the bracket coupling portion 333 of the side key bracket 330 when the side key bracket 330 is mounted on the sliding coupling portion 120. The coupling hole 131 is formed in the screw coupling portion 130 and is screw coupled with the bracket coupling portion 333.

As described above, according to the mobile terminal 1 according to the present embodiment, a superior waterproof function may be obtained and manufacture and assembly thereof are made easy.

Hereinafter, a method for manufacturing the mobile terminal 1 according to an embodiment of the present invention is described.

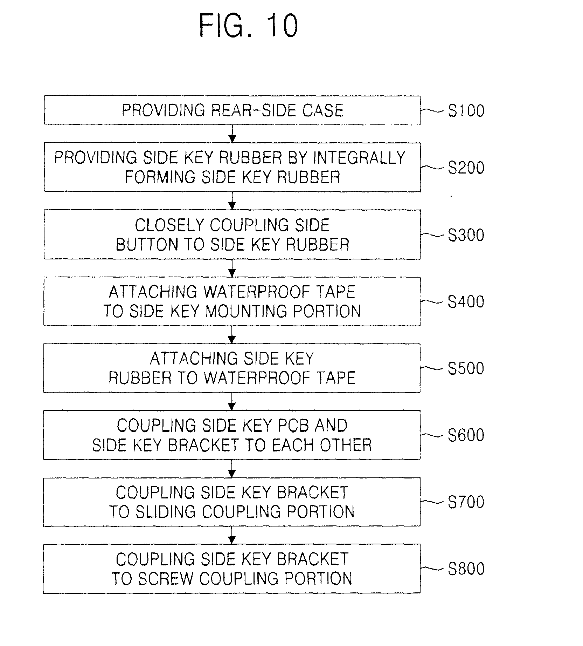

FIG. 10 is a flowchart for explaining a method for manufacturing a mobile terminal according to an embodiment of the present invention.

Referring to FIG. 10, the method for manufacturing the mobile terminal 1 according to an embodiment of the present invention includes providing a rear-side case equipped with a side key mounting portion (S100), providing a side key rubber by forming the same (S200), closely coupling a side button to the side key rubber (S300), attaching a waterproof tape on an inner surface of a side key through-hole along an edge portion of the side key through-hole of the rear-side case (S400), attaching the side key rubber to the waterproof tape (S500), coupling a side key PCB and a side key bracket to each other (S600), coupling the side key bracket coupled with the side key PCB to a sliding coupling portion of the rear-side case (S700), and coupling the side key bracket to a screw coupling portion of the rear-side case (S800).

In S200 in which the side key rubber is integrally formed and provided, the side key rubber 312 is formed of an elastic material by an injection molding method. As the side key rubber 312 is provided by using an elastic material, when the side key unit 300 is pressed, a button portion may repeatedly operate by an elastic restoration force.

In S400 in which the waterproof tape is attached, a tape that is specially manufactured to have a superior adhesive force, though the tape is formed of a rubber material, is used.

According to the method for manufacturing the mobile terminal 1 according to the present invention, a superior waterproof function may be obtained and manufacture and assembly thereof is made easy.

While this invention has been particularly shown and described with reference to exemplary embodiments thereof, it will be understood by those skilled in the art that various changes in form and details may be made therein without departing from the spirit and scope of the invention as defined by the appended claims.

### [INDUSTRIAL APPLICABILITY]

The present invention may be used for mobile terminals such as mobile communication terminals such as cellular phones, personal digital assistants (PDAs), etc.

## Claims

1. A mobile terminal comprising:
a rear-side case provided with a side key mounting portion having a side key through-hole formed in a plate surface of the rear-side case;
a waterproof tape provided on an inner surface along an edge portion of the side key through-hole of the side key mounting portion; and
a side key unit coupled to the waterproof tape.

2. The mobile terminal of claim 1, wherein the side key unit comprises:
a button unit coupled to the waterproof tape and performing a user input;
a side key PCB provided adjacent to the button unit and transferring a signal input from the button unit to a main PCB; and
a side key bracket coupled to the side key PCB and coupled to the side key mounting portion to support the button unit.

3. The mobile terminal of claim 2, wherein the button unit comprises:
a side button outwardly protruding through the side key through-hole; and
a side key rubber coupled to the side button and coupled to the waterproof tape along an edge portion where the side button is coupled.

4. The mobile terminal of claim 3, wherein the side key rubber comprises:
a rubber body portion coupled to the waterproof tape; and
a rubber input portion provided with a carbon contact for transferring a user input at a center portion of the rubber body portion.

5. The mobile terminal of claim 4, wherein the rubber input portion has a dome shape at the center portion of the rubber body portion.

6. The mobile terminal of claim 5, wherein the side key rubber is formed of an elastic material.

7. The mobile terminal of claim 3, wherein the side key robber is integrally formed to prevent an intrusion of moisture or foreign materials through a surface.

8. The mobile terminal of claim 2, wherein the side key PCB comprises:
an input substrate portion receiving an input of a signal through contact of the button unit; and
a connection terminal portion coupled to the input substrate portion, electrically connected to the main PCB in a state of at least a part of the connection terminal portion being elastically pressed, and transferring an input signal to the main PCB.

9. The mobile terminal of claim 8, wherein the connection terminal portion comprises a plurality of pogo pins, and the pogo pins are electrically connected to the main PCB.

10. The mobile terminal of claim 2, wherein the side key bracket comprises:
a bracket body portion coupled to the side key PCB and stably fixing and supporting the button unit;
a bracket wing portion extending from each of both side surfaces of the bracket body portion, forming a step, and vertically slidably coupled to the rear-side case; and
a bracket coupling portion protruding from a lower portion of the bracket body portion and having a through-hole formed in a plate surface of the bracket coupling portion to be coupled to the rear-side case.

11. The mobile terminal of claim 10, wherein the bracket coupling portion is screw-coupled to the rear-side case.

12. The mobile terminal of claim 10, wherein the rear-side case comprises:
a sliding coupling portion provided at each of opposite side surfaces of the side key mounting portion and to which the bracket wing portion is vertically slidably coupled; and
a screw coupling portion provided adjacent to a lower portion of the side key mounting portion and having a coupling hole for coupling the bracket coupling portion.

13. The mobile terminal of claim 1, wherein the waterproof tape is an adhesive tape that is attachable on a rubber material.

14. A method for manufacturing a mobile terminal, the method comprising:
providing a rear-side case equipped with a side key mounting portion;
providing a side key rubber by forming the side key rubber;
closely coupling a side button to the side key rubber;
attaching a waterproof tape on an inner surface of a side key through-hole along an edge portion of the side key through-hole of the rear-side case;
attaching the side key rubber to the waterproof tape;
coupling a side key PCB and a side key bracket to each other;
coupling the side key bracket coupled with the side key PCB to a sliding coupling portion of the rear-side case; and
coupling the side key bracket to a screw coupling portion of the rear-side case.

15. The method of claim 14, wherein, in the providing of the side key rubber by forming the side key rubber, the side key rubber is formed of an elastic material by an injection molding method.
